# EUROPÄISCHE PATENTSCHRIFT

(11) **EP 0 877 463 B1**
(45) Veröffentlichungstag und Bekanntmachung des Hinweises auf die Patenterteilung: **13.04.2005**
(21) Anmeldenummer: 98111587.6
(22) Anmeldetag: 19.09.1995
(51) Int. Cl.: H02K 5/128, H02K 3/47, H02K 3/26, H02K 11/04, H02K 11/00, F04D 15/02, F04D 15/00

(54) **Spaltrohrpumpe**
Canned pump
Pompe à tube d'entrefer

(30) Priorität: 27.10.1994 DE 4438132
(43) Veröffentlichungstag der Anmeldung: 11.11.1998
(62) Teilanmeldung aus: 95114761.0
(73) Patentinhaber: WILO AG, 44263 Dortmund (DE)
(72) Erfinder: Hanitsch, Rolf, Prof. Dr., 14197 Berlin (DE); Kech, Hansjürgen, Dipl.-Ing., 58313 Herdecke (DE)
(74) Vertreter: COHAUSZ DAWIDOWICZ HANNIG & PARTNER

(56) Entgegenhaltungen:
- EP-A- 0 105 687
- EP-A- 0 401 761
- DE-A- 1 638 272
- DE-A- 2 251 928
- DE-A- 3 526 166
- FR-A- 1 296 666
- JP-A- 57 097 348
- PATENT ABSTRACTS OF JAPAN vol. 008, no. 022 (M-272), 31. Januar 1984 (1984-01-31) -& JP 58 180787 A (MATSUSHITA DENKI SANGYO KK), 22. Oktober 1983 (1983-10-22)

## Beschreibung

Die Erfindung betrifft eine von einem elektronisch kommutierten (EC-) Motor betriebene Pumpe, mit einem zwischen einem Rotor und einem Ständer angeordneten Spaltrohr oder Spalttopf, an dessen dem Pumpenlaufrad zugewandten Seite ein radial nach außen gerichteter Kragen angeformt ist, und mit einem auf einer Welle gehaltenen Laufrad, wobei das Spaltrohr oder der Spalttopf die am Kragen angeordnete Ständerwicklung trägt und wobei auf der dem Kragen zugewandten Seite des Pumpenlaufrades Permanentmagnete gleichmäßig um die Laufradachse herum verteilt angeordnet sind, die zur Drehmomentübertragung vom Stator auf das Pumpenlaufrad dienen. Die Erfindung betrifft weiterhin eine von einem elektronisch kommutierten (EC-) Motor betriebene Pumpe, mit einem zwischen einem Rotor und einem Ständer angeordneten flachen Trennkörper und mit einem auf einer Welle gehaltenen Laufrad, wobei der Trennkörper die Ständerwicklung trägt, die gebildet ist von einer Leiterplatine oder einer ein- oder mehrlagigen Folienwicklung oder einer Backlackwicklung.

Spaltrohrpumpen werden fast ausschließlich mit Asynchronmaschinen in Drehstrom oder Wechselstrom betrieben, da Asynchronmaschinen eine hohe Fertigungsreife erreicht haben und sich durch ihre kompakte Bauweise und ihre Zuverlässigkeit ausweisen. Im kleinen und mittleren Leistungsbereich ist der Wirkungsgrad von Asynchronmaschinen jedoch ungenügend. Ebenso nachteilig ist der bei kleinen Asynchronmaschinen unverhältnismäßig große Aufwand an Elektronik für die stufenlose Regelung des Motors. Spaltrohrmotoren haben jedoch den Vorteil, dass die elektrische Antriebsseite hermetisch mittels des Spaltrohres bzw. Spalttopfes von den rotierenden Teilen sowie dem Fördermedium getrennt ist.

Aus der DE 16 38 272 ist eine Pumpe mit Spaltrohrmotor bekannt, dessen als Pumpenrotor ausgebildeter von der Förderflüssigkeit umspülter Rotor im Spaltrohr und dessen Motorwicklung auf der Außenseite des Spaltrohres angeordnet ist. Der Spaltrohrmotor ist ein kollektorloser Gleichstrommotor, dessen Permanentmagnete unmittelbar auf dem Pumpenrotor befestigt sind und dessen das Antriebsfeld steuernde Halbleiterelemente auf der Außenseite des Spaltrohres angeordnet sind. Die Ständerwicklung bei diesem Spaltrohrmotor besteht aus einzelnen Windungen, die bei der Montage nacheinander einzeln auf den Spalttopf aufgelegt werden oder einzeln in die Nuten des Ständerblechpakets eingelegt werden.

Die EP 0 401 761 A2 offenbart eine Pumpe der Spalttopfbauart, bei der beabstandet vom Kragen des Spalttopfes die Ständerwicklungen angeordnet sind.

Die DE 35 26 166 A1 offenbart eine gedruckte Spuleneinheit z.B. für flache bürstenlose Motoren. Ein Einsatz derartiger Spuleneinheiten bei Nassläuferpumpen wird nicht beschrieben.

Die EP 0 105 687 zeigt eine Pumpe mit einem Laufrad, welches einen kreisförmigen Permanentmagneten trägt und welches durch eine Wandung des Pumpengehäuses von hinter dieser Wand angeordneten Statormagneten getrennt ist und durch diese angetrieben wird.

Die FR 1 296 666 zeigt eine Pumpe mit einem plan ausgebildeten Trennkörper zwischen Laufrad und Stator. Auch hier ist separat hinter dem Trennkörper die Statorwicklung angeordnet.

Die JP 58-180787 und deren englischer Abstract zeigt eine bei einer Zahnradpumpe eingesetzte Spalttopfkonstruktion, bei der beabstandet hinter dem Kragen des Spalttopfes Statorwicklungen angeordnet sind.

Eine Backlackwicklung und deren Einsatz bei Elektromotoren ist in der JP 57-097348 beschrieben.

Nachteilig ist bei den vorgenannten Ausführungen, dass der Fertigungsaufwand zum Wickeln der Ständerwicklungen relativ hoch ist und beim Aufwickeln der Ständerwicklung vom Fertigungspersonal Fehler begangen werden können.

Aufgabe der Erfindung ist es daher, derartige Pumpen dahingehend weiter zu entwickeln, dass der Fertigungsaufwand verringert und die Funktionssicherheit erhöht wird.

Erfindungsgemäß wird diese Aufgabe dadurch gelöst, dass die Ständerwicklung gebildet ist von einer ein- oder mehrlagigen Folie mit integrierten elektrisch leitenden Wicklungen oder von einer Leiterplatine (Multilayer), oder einer Backlackwicklung, wobei die Ständerwicklung in die vom Laufrad abgewandte Seite des Kragens des Spalttopfes bzw. des Trennkörpers eingelegt, eingegossen, eingeschlossen oder eingebacken ist.

Durch die vorteilsmäßige Verwendung einer ein- oder mehrlagigen Folie mit integrierten elektrischen leitenden Wicklungen verringert sich der Fertigungsaufwand erheblich, da lediglich die vorgefertigte Folie um den Spalttopf bzw. das Spaltrohr gelegt werden muss. Durch den Einsatz verschiedener vorgefertigter Folien oder Leiterplatinen kann der Spaltrohrmotor für unterschiedlichste Aufgaben in seiner Leistung dimensioniert werden.

Mittels einer Backlackwicklung lässt sich eine sehr enge Bewicklung des Spalttopfes erzielen, wobei insbesondere durch das Verbacken bzw. Einschmelzen der Backlackwicklung mit dem Kragen des Spalttopfes eine besonders stabile Konstruktion erzielt wird. Die Wicklungen können hierdurch durch die auftretenden Feldkräfte nicht gegeneinander verschoben werden. Dadurch erniedrigen sich die bei herkömmlichen Wicklungen auftretenden Wicklungsgeräusche. Die oben aufgeführten Ausführungsformen zeichnen sich vorteilsmäßig dadurch aus, dass der Luftspalt zwischen Ständer und Rotor vorteilsmäßig nur von der Dicke des Spaltrohres bzw. Spalttopfes abhängt. Das Spaltrohr bzw. der Spalttopf hat somit vorteilsmäßig eine doppelte Funktion. Einerseits übernimmt es die Aufgabe als Wicklungsträger mit guter Wärmeabfuhr und andererseits dient es zur Trennung der elektrischen Antriebsseite von dem Rotor.

Die für die Ständerwicklung eingesetzte ein- oder mehrlagige Folie kann vorteilsmäßig mittels eines Ätzverfahrens hergestellt werden. Hierbei werden die Windungen in einem Arbeitsschritt hergestellt, wodurch sich Fehler bei der Herstellung der Wicklungen auf ein Minimum reduzieren. Auch sind derartige Folien relativ kostengünstig herzustellen. Sie zeichnen sich besonders durch ihre flachen Abmessungen und ihre hohe Lebensdauer aus.

Vorteilhaft ist es, dass das Spaltrohr oder der Spalttopf einen an seiner dem Pumpenlaufrad zugewandten offenen Seite angeformten, radial nach außen gerichteten Kragen (Lagerschild) hat.

Die Permanentmagnete dienen gleichzeitig zur Erzeugung des Antriebsdrehmomentes sowie zur Übertragung von Sendesignalen. Auch ist es vorteilsmäßig, wenn die Permanentmagnete segmentförmig sind, wobei die Permanentmagnete an einem Trägerelement befestigt oder eingeformt sind, wobei das Trägerelement form- oder kraftschlüssig vom Rotor gehalten ist. Das Trägerelement ist dabei vorzugsmäßig ein auf den Rotor aufgeschobenes hülsenförmiges Kunststoffteil, welches mit seiner äußeren Mantelfläche form- oder kraftschlüssig ein Blechpaket hält, wobei die Permanentmagnete in oder an der dem Kunststoffteil abgewandten Seite des Blechpaketes einliegen bzw. befestigt sind. Sind die Permanentmagnete am Laufrad angeordnet, so übernimmt das Laufrad die Rotorfunktion. Die Permanentmagnete liegen dann koaxial zur Laufradachse und haben die Form von flachen Ringausschnitten bzw. Ringsektoren.

Der Axialflussmotor ist ein elektrisch kommutierter Motor. Vorteilsmäßig sind die Permanentmagnete flach ausgebildet, damit ein geringeres Gewicht, niedrigere Fertigungskosten sowie eine kompaktere bzw. kleinere Bauweise der Pumpe erzielt wird.

Es ist von Vorteil, wenn eine Elektronik die Kommutierung der Ständerwicklung zur Erzeugung des sich drehenden Ständermagnetfeldes vornimmt, wobei die einzelnen Wicklungen der Ständerwicklung mit der Elektronik in elektrischer Verbindung sind. Der Wirkungsgrad eines derartigen elektronisch kommutierten bürstenlosen Motors ohne Ansteuerelektronik ist vorteilsmäßig deutlich höher als bei vergleichbaren Asynchronmaschinen.
Ein als elektronisch kommutierter Axialflussmotor ausgeführter Motor zeichnet sich durch eine gegenüber dem Radialflussmotor kompaktere Bauweise aus. Ein weiterer Vorteil des Axialflussmotors gegenüber dem Radialflussmotor besteht darin, dass durch die höheren Strömungsgeschwindigkeiten am Laufrad, verglichen mit den Strömungsgeschwindigkeiten im Spalttopf, die magnetischen Ablagerungen an den Permanentmagneten kleiner sind, wodurch die Drehmomentübertragung zwischen Stator und Rotor weniger stark beeinflusst ist.

Auch ist es vorteilsmäßig, wenn die Folie mindestens eine zusätzliche Sensorwicklung hat oder dass die Ständerwicklung eine zusätzliche Folie mit mindestens einer Sensorwicklung hat oder dass in der Ständerfolienwicklung Sensoren einliegen oder dass mindestens eine Folie mindestens einen induktiven kapazitiven oder ohmschen Sensor hat. Durch die platzsparende Integration derartiger Sensoren, die bei der Rotorpositionserfassung derartiger bürstenloser elektronisch kommutierter Motoren notwendig sind, wird eine Kosten- und Gewichtsersparnis erzielt.

Auch ist es vorteilsmäßig, wenn das Spaltrohr oder der Spalttopf aus einem weichmagnetischen Werkstoff oder Kunststoff ist. Hierdurch wird eine effektive Luftspaltverringerung erzielt, wodurch der Wirkungsgrad des Motors ebenfalls verbessert wird.

Wird die Spaltrohrpumpe zum Fördern eines Fördermediums eingesetzt, bei dem die Druck- bzw. Temperaturbeanspruchung eine Verringerung der Spaltrohr- bzw. Spalttopfdicke zulässt, ist es vorteilhaft, die Ständerwicklung und/oder Sensorwicklung in die vom Rotor oder vom Laufrad abgewandte Seite des Spaltrohres oder Spalttopfes einzulegen, einzugießen oder einzuschließen. Hierdurch lassen sich zusätzliche Fertigungskosteneinsparungen erzielen. Auch trägt das Eingießen der Ständerfolienwicklungen in die Außenwand des vorteilsmäßig aus Kunststoff gefertigten Spaltrohres oder Spalttopfes zur Gesamtstabilität des Spaltrohres bzw. Spalttopfes bei.

An der dem Spaltohr oder dem Spalttopf abgewandten Seite der Ständerwicklung ist vorteilsmäßig ein Ständerblechpaket, wobei das Ständerblechpaket insbesondere zylinder- oder topfförmig ist. Das Ständerblechpaket ist dabei mit seiner Innenfläche und/oder Bodeninnenseite mit dem Spaltrohr in Kontakt, wodurch ein guter Wärmeübergang zwischen Ständerblechpaket und Spaltrohr bzw. Spalttopf gegeben ist. Das Ständerblechpaket trägt ebenfalls vorteilsmäßig zur Stabilität der Statorkonstruktion bei.

Das Ständerblechpaket liegt mit seiner Stirnseite beim Axialmotor an den Ständerwicklungen an. Das Ständerblechpaket ist vorzugsmäßig aus einem beschichteten weichmagnetischen oder Sinter-Material. Auch kann das Ständerblechpaket ein Ringbandkern sein, wobei eine metallische Ronde als magnetischer Rückschluss dient.

Auch ist es von Vorteil, wenn die Motorelektronik neben dem Stator angeordnet ist bzw. an diesen anschließt, insbesondere an der dem Pumpenlaufrad abgewandten Seite des Stators, wobei das Statorblechpaket als Kühlkörper und gleichzeitig zur elektrischen Abschirmung für die Elektronik dient. Durch das direkte Anliegen der Elektronik am Statorblechpaket bzw. am Spaltrohr bzw. Spalttopf insbesondere an dessen Boden wird die von der Elektronik erzeugte Wärme direkt an das Fördermedium übertragen. Zusätzliche Kühlkörper für die Elektronik sind nicht mehr notwendig, wodurch sich die Abmessungen des Motors sowie dessen Fertigungskosten reduzieren lassen. Die Motorelektronik ist dabei vorzugsweise als aufsteckbares Modul ausgebildet, so dass je nach späterem Einsatzgebiet und Leistungsauslegung des Motors ein entsprechendes Elektronikmodul gewählt werden kann. An dem Motorgehäuse und/oder der Motorelektronik sind Steckkontakte (Stecker oder Buchse), die vorzugsweise in axialer Richtung angeordnet sind. Am Spalttopf und/oder dem Statorblechpaket und/oder der Ständerwicklung sind gleichfalls Kontakte (Stecker oder Buchse) angeordnet. Beim axialen Zusammenfügen der Teile werden gleichzeitig die Steckverbindungen geschlossen. Die Motorelektronik bzw. das Elektronikmodul kann zudem einen Teil des Motorgehäuses bilden. Durch diese Integration lässt sich der Montageaufwand weiter reduzieren.

Es ist ebenfalls von Vorteil, wenn an der dem Pumpenlaufrad abgewandten Seite des Kragens des Spaltrohrs oder Spalttopfes mindestens ein Sensorelement, insbesondere Temperatursensor, angeordnet ist. Ebenfalls vorteilsmäßig ist es, wenn mittels des bzw. der Temperatursensoren die Temperatur des Lagerschildes bzw. Kragens des Spalttopfes erfassbar bzw. messbar ist und durch die mittels der Permanentmagnete in den nicht stromführenden Strangwicklungen der Ständerwicklung induzierten Spannung die Rotorlage, Rotordrehzahl, sowie Rotordrehrichtung erfassbar bzw. messbar ist, wobei die Messsignale einer Auswertelektronik zugeführt werden, die den Volumenstrom des Fördermediums bestimmt. Auch kann vorteilsmäßig die gemessene Stromstärke in den einzelnen Ständerwicklungen zur Bestimmung des Volumenstroms mittels der Auswertelektronik herangezogen werden. Durch die Auswertelektronik lässt sich zudem vorteilsmäßig und kostengünstig eine Wärmemengenregelung der Pumpe vornehmen. Zur Verbesserung der angestrebten (kalorimetrischen) Volumenstrommessung wird die Lagerschildfläche des Spalttopfes speziell ausgeformt, um die Sensoren in einen guten Wärmekontakt mit dem Fördermedium bzw. der Lagerschildfläche des Spalttopfes zu bringen.

Ein vorteilsmäßiges Verfahren zur Montage der Ständerwicklung sieht vor, dass die Folienwicklung an den Kragen des Spalttopfes bzw. Spaltrohres gelegt oder auf diesen aufgeschoben wird und mittels einer Schraub-, Kleb-, Schweiß-, Klemm- oder Nietverbindung an diesem befestigt wird. Auch können die Ständerwicklungen einzeln an den Kragen des Spalttopfes bzw. Spaltrohres aufgewickelt bzw. aufgelegt und mittels einer Klemmoder Klebvorrichtung in Position gehalten werden. Es ist ebenfalls vorteilsmäßig, wenn die Ständerwicklungen einzeln oder im Verbund auf den Kragen des Spalttopfes aufgewickelt, aufgelegt oder in diese eingeätzt werden und anschließend mit einer Substanz umgossen werden, die nach dem Gießprozess hart wird und die Wicklungen auf dem Spalttopf in Position hält. Mittels dieser Verfahren lässt sich die Ständerwicklung schnell, einfach und kostengünstig an dem scheibenförmigen Kragen des Spalttofes bzw. an dem Trennkörper montieren.

Nachfolgend wird der erfindungsgemäße Gegenstand anhand der Zeichnungen näher erläutert.

Es zeigen:
- Fig. 1:: Eine Spaltrohrpumpe mit einem elektronisch kommutierten Axialflussmotor mit integrierter Elektronik.
- Fig. 2:: Eine Spaltrohrpumpe mit einem elektronisch kommutierten Axialflussmotor mit im Gehäuse integriertem Elektronikmodul.
- Fig. 3:: Eine Pumpe mit einem elektrischen kommutierten Axialflussmotor, bei der das Spaltrohr durch einen flachen Trennkörper ersetzt ist.

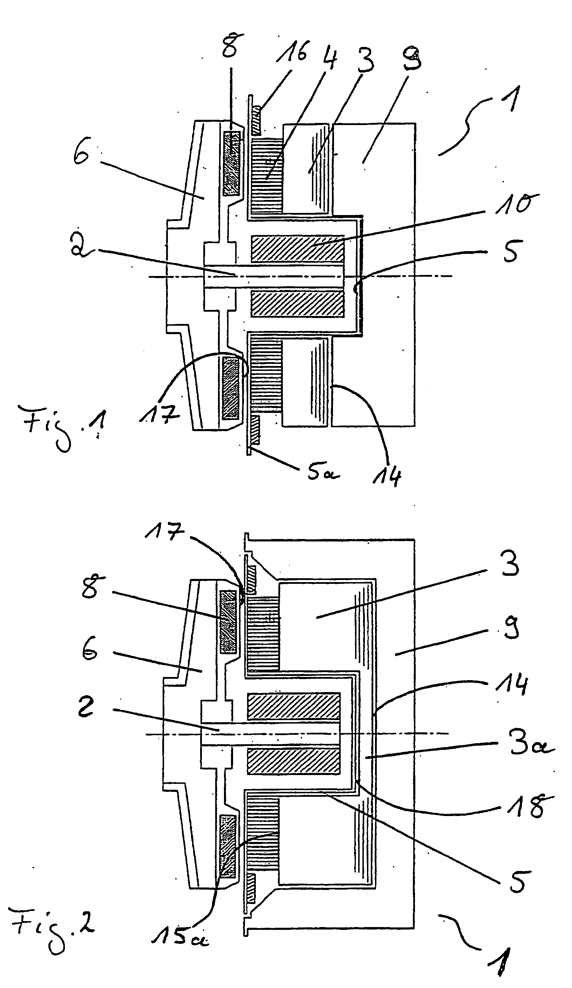

In Fig. 1 ist ein elektronisch kommutierter Axialflussmotor für eine Spaltrohrpumpe 1 dargestellt, wobei die Ständerwicklung an der dem Pumpenlaufrad 6 abgewandten Seite des Spalttopfkragens 5a anliegt. Die Ständerwicklung 4 wird auf ihrer dem Kragen 5a abgewandten Seite von dem ringförmigen Ständerblechpaket 3 gehalten. An der der Ständerwicklung 4 abgewandten Stirnseite des Ständerblechpakets 3 liegt die als Modul ausgebildete Motorelektronik 9 mit ihrer Anlagefläche 14 an. Der Rotor 2 ist von einem Lager 10 gehalten, wobei das Lager 10 insbesondere ein Gleitlager ist.

Die Permanentmagnete 8 sind an der dem Spalttopfkragen 5a zugewandten Seite des Pumpenlaufrades 6 angeordnet bzw. eingegossen. Die Permanentmagnete 8 sind dabei ungefähr im radialen Bereich der Ständerwicklung 4 angeordnet. Die Motorelektronik 9 liegt wie beim Radialflussmotor an der Spalttopfbodenaußenseite 5 an.

Die Permanentmagnete 8 sind mit ihrem radial nach außen zeigenden Ende im Erfassungsbereich der Sensorelemente 16, die die Rotorposition bzw. die Position der am Laufrad angeordneten Permanentmagnete 8 erfassen bzw. bestimmen. Die Sensorelemente 16 sind koaxial um die Ständerwicklung 4 angeordnet und sind elektrisch mit der Motorelektronik in Verbindung.

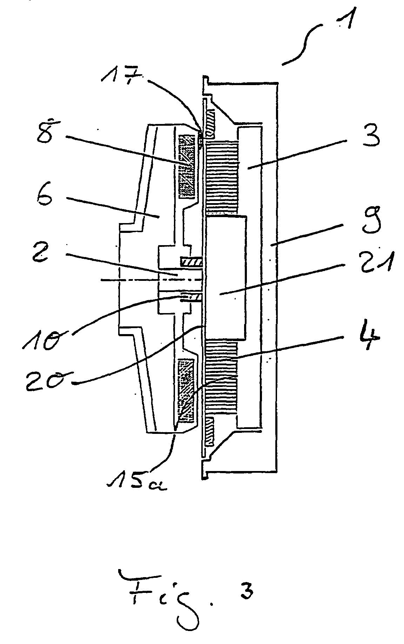

Der in Fig. 2 dargestellte elektronisch kommutierte Axialflussmotor unterscheidet sich von dem in Fig. 1 dargestellten Motor dadurch, dass das Ständerblechpaket 3 sowie das Motorgehäuse mit integrierter Motorelektronik 9 topfförmig ist, wobei wiederum die Ständerwicklung 4 zwischen dem Spalttopfkragen 5a und der Stirnseite 15a des Ständeblechpakets 3 einliegt. Die Topfinnenseite des Ständerblechpakets 3 liegt vollständig an der Spalttopfaußenseite 5 an. Das topfförmige Ständerblechpaket 3 liegt seinerseits am topfförmigen Motorgehäuse 9 ein. Zwischen den Anlageflächen 14 der Motorelektronik 9 und des Ständerblechpakets 3 kann eine nicht dargestellte Wärmeleitpaste sein.

Fig. 3 beschreibt eine Pumpe mit elektronisch kommutierten Axialflussmotor, bei der der Spalttopf 5 durch einen flachen Trennkörper 20 ersetzt ist. Der flache Trennkörper 20 ist im wesentlichen eine flache Scheibe, an dessen der zum Pumpenlaufrad 6 zeigenden Seite das die Welle 2 des Laufrades 6 umgreifende Lager 10 zentrisch befestigt ist und an dessen anderen flachen Seite die Ständerwicklung 4 anliegt, wobei die ringförmige Ständerwicklung 4 um ein zylindrisches Teil 21 angeordnet sein kann. An der dem flachen Trennkörper 20 abgewandten Stirnseite der Ständerwicklung 4 liegt das Ständerblechpaket 3 an, welches für den magnetischen Rückfluss der Ständerwicklung 4 dient. Die Ständerwicklung 4, das Ständerblechpaket 3 sowie zusätzliche Sensorelemente 16 liegen im topfförmigen Gehäuse 9 ein, welches mit dem Rand des flachen Trennkörpers 20 dichtend abschließt, so dass die elektrischen bzw. elektronischen Teile der Antriebsseite gegen äußere Einflüsse geschützt sind. Das Motorgehäuse 9 nimmt ebenfalls die benötigte Motorelektronik (Regelungselektronik und/oder Steuerelektronik) auf.

## Patentansprüche

1. Von einem elektronisch kommutierten (EC-) Motor betriebene Pumpe (1), mit einem zwischen einem Rotor (2) und einem Ständer angeordneten Spaltrohr oder Spalttopf, an dessen dem Pumpenlaufrad zugewandten Seite ein radial nach außen gerichteter Kragen angeformt ist, und mit einem auf einer Welle gehaltenen Laufrad, wobei das Spaltrohr oder der Spalttopf (5) die am Kragen angeordnete Ständerwicklung trägt und wobei auf der dem Kragen zugewandten Seite des Pumpenlaufrades Permanentmagnete gleichmäßig um die Laufradachse herum verteilt angeordnet sind, die zur Drehmomentübertragung vom Stator auf das Pumpenlaufrad dienen, **dadurch geke**n**n**z**e**i**chnet**, daß die Ständerwicklung gebildet ist von einer ein- oder mehrlagigen Folienwicklung oder einer Leiterplatine oder einer Backlackwicklung, wobei die Ständerwicklung (4) in die vom Laufrad (6) abgewandte Seite des Kragens des Spalttopfes (5) eingelegt, eingegossen, eingeschlossen oder eingebacken ist.

2. Pumpe (1) nach Anspruch 1, **dadurch gekennzeichnet, dass** an der dem Kragen (5a) abgewandten Seite der Ständerwicklung (4) ein zylinderoder topfförmiges Ständerblechpaket (3) anliegt, das mit seiner Innenfläche und/oder Bodeninnenseite (3a) mit dem Spaltrohr bzw. Spalttopf (5) in Kontakt ist.

3. Pumpe (1) nach einem der vorherigen Ansprüche, **dadurch gekennzei**c**hnet**, dass das Ständerblechpaket (3) aus einem beschichteten weichmagnetischen oder Sintermaterial ist oder das Ständerblechpaket (3) ein Ringbandkern ist, wobei eine metallische Sonde als magnetischer Rückschluss dient.

4. Pumpe (1) nach einem der vorherigen Ansprüche, **dadurch gekenn**z**e**ich**net**, dass die Motorelektronik (9) neben dem Stator angeordnet ist bzw. an diesen anschließt, insbesondere an der dem Pumpenlaufrad (6) abgewandten Seite des Stators, wobei das Statorblechpaket (3) als Kühlkörper und zur elektronischen Abschirmung für die Elektronik (9) dient.

5. Pumpe (1) nach Anspruch 4, **dadurch gekennzeichnet, dass** die Motorelektronik (9) an der dem Laufrad (6) abgewandten Spalttopfbodenseite anliegt.

6. Pumpe (1) nach einem der Ansprüche 4 oder 5, **dadurch gekennzeichnet, dass** die Motorelektronik (9) als insbesondere aufsteckbares Modul ausgebildet ist oder dass die Motorelektronik (9) einen Teil des Motorgehäuses bildet und/oder über Steckkontakte verfügt, die mit am Spalttopf (5) und/oder Statorblechpaket (3) und/oder der Ständerwicklung (4) angeordneten Kontakten die elektrische Verbindung realisieren.

7. Von einem elektronisch kommutierten (EC-) Motor betriebene Pumpe (1), mit einem zwischen einem Rotor und einem Ständer angeordneten flachen Trennkörper (20) und mit einem auf einer Welle (2) gehaltenen Laufrad (6), wobei der Trennkörper (20) die Ständerwicklung (4) trägt, die gebildet ist von einer Leiterplatine oder einer ein- oder mehrlagigen Folienwicklung oder einer Backlackwicklung, **dadurch gekennzeichnet, daß** die Ständerwicklung in die vom Laufrad (6) abgewandte Seite des Trennkörpers (20) eingelegt, eingegossen, eingeschlossen oder eingebacken ist.

8. Pumpe (1) nach einem der vorherigen Ansprüche, **dadurch geken**nz**ei**c**hnet**, dass die Folienwicklung oder Backlackwicklung von einer aushärtenden Substanz umgossen und von dieser in Position gehalten ist.

9. Pumpe (1) nach einem der vorherigen Ansprüche, **dadurch gekennze**i**chnet**, dass in der Ständerfolien-Wicklung (4) Sensoren einliegen oder das mindestens eine Folie mindestens einen induktiven, kapazitiven oder ohmeschen Sensor hat.

10. Pumpe (1) nach einem der vorherigen Ansprüche, **dadurch gekennzeic**h**net**, dass an der dem Pumpenlaufrad (6) abgewandten Seite des Kragens (5a) des Spaltrohrs oder Spalttopfes (5) bzw. des Trennelementes mindestens ein Sensorelement (16), insbesondere Temperatursensor, angeordnet ist.

11. Pumpe (1) nach Anspruch 10, **dadurch gekennzeichnet, dass** mittels des bzw. der Temperatursensoren (16) die Temperatur des Kragens/trennelementes (5a) erfassbar bzw. messbar ist, und durch die mittels der Permanentmagnete (8) in den nicht stromführenden Strangwicklungen der Ständerwicklung (4) induzierten Spannungen die Rotorlage, Rotordrehzahl sowie Drehrichtung erfassbar bzw. messbar ist, wobei die Messsignale einer Auswertelektronik zugeführt werden, die den Volumenstrom des Fördermediums bestimmt.

12. Pumpe (1) nach Anspruch 11, **dadurch gekennzeichnet, dass** die Auswertelektronik zur Bestimmung des Volumenstroms die momentanen Stromstärken in den einzelnen Ständerwicklungen (4) berücksichtigt.

13. Pumpe (1) nach Anspruch 11 oder 12, **dadurch gekennzeichnet, dass** die Auswertelektronik eine Wärmemengenregelung der Pumpe (1) vornimmt.

## Claims

1. A pump (1) driven by an electronically commutated (EC) motor having, arranged between a rotor (2) and a stator, a spacer sleeve or spacer can with a radially outwardly directed collar formed onto it facing the pump running wheel, and having a running wheel held on a shaft, the spacer sleeve or the spacer can (5) carrying the stator winding which is arranged on the collar, and permanent magnets being arranged uniformly distributed around the running wheel axis on the side of the pump running wheel facing the collar, the permanent magnets acting to transmit the torque from the stator to the pump running wheel, **characterised in that** the stator winding is formed of a single layer or multi layer foil winding or of a circuit board or of a varnished heat bonded winding, the stator winding (4) being laid in or cast within or enclosed in or heat bonded within the side of the collar of the spacer can (5) that faces away from the running wheel (6 ).

2. Pump (1) according to claim 1, **characterised in that** there abuts against the side of the stator winding (4) which faces away from the collar (5a), a cylindrical or can shaped bundle of stator laminations (3) that is in contact by way of its inner surface and/or base inner side (3a) with the spacer sleeve respectively the spacer can (5).

3. Pump (1) according to one of the preceding claims, **characterised in that** the bundle of stator laminations (3) is of a coated soft magnetic material or sintered material, or the bundle of stator laminations (3) is a toroidal tape core, a metallic probe serving as magnetic loop back.

4. Pump (1) according to one of the preceding claims, **characterised in that** the motor electronics (9) is arranged beside the stator respectively adjoins it, especially at the side of the stator facing away from the pump running wheel (6), the bundle of stator laminations (3) serving as heat sink and for electronic shielding of the electronics (9).

5. Pump (1) according to claim 4, **characterised in that** the motor electronics (9) abuts against the side of the can base that faces away from the running wheel (6).

6. Pump (1) according to one of claims 4 or 5, **characterised in that** the motor electronics (9) is constructed as a module, especially a plug in module, or **in that** the motor electronics (9) forms part of the motor housing and/or possesses plug in connectors which effect electrical connection with the connectors arranged on the spacer can (5) and/or the bundle of stator laminations (3) and/or the stator winding (4).

7. A pump (1) driven by an electronically commutated (EC) motor having, arranged between a rotor and a stator, a flat partition member (20), and having a pump running wheel (6) held on a shaft (2), the partition member (20) carrying the stator winding (4) which is formed of a circuit board or a single layer or multi layer foil winding or of a varnished heat bonded winding, **characterised in that** the stator winding is laid in or cast within or enclosed in or heat bonded within the side of the partition member (20) that faces away from the running wheel (6).

8. Pump (1) according to one of the preceding claims, **characterised in that** the foil winding or varnished heat bonded winding has cast around it a hardening substance and is held in position by the latter.

9. Pump (1) according to one of the preceding claims, **characterised in that** the stator foil winding (4) has sensors laid in it or that at least one foil has at least one inductive, capacitative or resistive sensor.

10. Pump (1) according to one of the preceding claims, **characterised in that** at least one sensor means (16), especially a temperature sensor, is arranged at the side of the collar (5a) of the spacer sleeve or spacer can (5) respectively of the partition member, namely on the side that faces away from the pump running wheel (6).

11. Pump (1) according to claim 10, **characterised in that** the temperature of the collar/partition member (5a) can be captured or measured by way of the temperature sensor(s) (16), and the rotor position, rotor speed and direction of rotation can be captured or measured by way of the voltages induced by the permanent magnets (8) in the non current conducting phase windings of the stator winding (4), the measurement signals being fed to an evaluation electronic device which determines the volume flow of the pumping medium.

12. Pump (1) according to claim 11, **characterised in that** the evaluation electronic device for determining the volume flow takes account of the current magnitudes present at that moment in the individual stator windings (4).

13. Pump (1) according to claim 11 or 12, **characterised in that** the evaluation electronic device carries out quantity of heat regulation of the pump (1).

## Revendications

1. Pompe (1) entraînée par un moteur à commutation électronique (EC), comprenant un tube d'entrefer ou pot d'entrefer disposé entre un rotor (2) et un stator, sur le côté duquel tourné vers la roue de pompe est conformé un collet dirigé radialement vers l'extérieur, et comprenant une roue maintenue sur un arbre, le tube d'entrefer ou le pot d'entrefer (5) portant l'enroulement de stator disposé sur le collet et des aimants permanents étant répartis régulièrement tout autour de l'axe de roue sur le côté de la roue de pompe tourné vers le collet, qui servent à la transmission de couple du stator à la roue de pompe, **caractérisée en ce que** l'enroulement de stator est formé d'un enroulement en feuille mono- ou multicouche ou d'une carte de circuit imprimé ou d'un enroulement auto-connectable, l'enroulement de stator (4) étant inséré, coulé, inclus ou enserré dans le côté du collet du pot d'entrefer (5) opposé à la roue (6).

2. Pompe (1) suivant la revendication 1, **caractérisée en ce que** sur le côté de l'enroulement de stator (4) opposé au collet (5a) s'applique un empilage de tôles de stator (3) en forme de cylindre ou de pot qui est au contact du tube d'entrefer ou pot d'entrefer (5) par sa surface intérieure et/ou son côté intérieur de fond (3a).

3. Pompe (1) suivant l'une des revendications précédentes, **caractérisée en ce que** l'empilage de tôles de stator (3) est formé d'un matériau magnétique doux revêtu ou d'un matériau fritté ou que l'empilage de tôles de stator (3) est un noyau en bande annulaire, une sonde métallique servant de court-circuit magnétique.

4. Pompe (1) suivant l'une des revendications précédentes, **caractérisée en ce que** l'électronique de moteur (9) est disposée à côté du stator ou se raccorde à ce dernier, en particulier sur le côté du stator opposé à la roue de pompe (6), l'empilage de tôles de stator (3) servant de dissipateur thermique et de blindage électronique pour l'électronique (9).

5. Pompe (1) suivant la revendication 4, **caractérisée en ce que** l'électronique de moteur (9) s'applique sur le côté de fond du pot d'entrefer opposé à la roue (6).

6. Pompe (1) suivant l'une des revendications 4 et 5, **caractérisée en ce que** l'électronique de moteur (9) est configurée sous forme de module en particulier enfichable ou que l'électronique de moteur (9) forme une partie du carter moteur et/ou dispose de contacts à fiches qui réalisent la liaison électrique avec des contacts disposés sur le pot d'entrefer (5) et/ou sur l'empilage de tôles de stator (3) et/ou sur l'enroulement de stator (4).

7. Pompe (1) entraînée par un moteur à commutation électronique (EC), comprenant un corps de séparation plat (20) disposé entre un rotor et un stator et une roue (6) maintenue sur un arbre (2), le corps de séparation (20) portant l'enroulement de stator (4) formé d'une carte de circuit imprimé ou d'un enroulement en feuille mono- ou multicouche ou d'un enroulement auto-connectable, **caractérisée en ce que** l'enroulement de stator est inséré, moulé, inclus ou enserré dans le côté du corps de séparation (20) opposé à la roue (6).

8. Pompe (1) suivant l'une des revendications précédentes, **caractérisée en ce que** l'enroulement en feuille ou enroulement auto-connectable est enrobé d'une substance durcissable et est maintenu en position par cette dernière.

9. Pompe (1) suivant l'une des revendications précédentes, **caractérisée en ce que** des capteurs sont inclus dans l'enroulement en feuille (4) du stator ou que la au moins une feuille présente au moins un capteur inductif, capacitif ou ohmique.

10. Pompe (1) suivant l'une des revendications précédentes, **caractérisée en ce qu'**au moins un élément capteur (16), en particulier un capteur de température, est disposé sur le côté du collet (5a) du tube d'entrefer ou pot d'entrefer (5), ou de l'élément de séparation, opposé à la roue de pompe (6).

11. Pompe (1) suivant la revendication 10, **caractérisée en ce que** la température de l'élément de séparation/collet (5a) est détectable ou mesurable au moyen du ou des capteurs de température (16), et que la position du rotor, la vitesse de rotation du rotor ainsi que le sens de rotation sont détectables ou mesurables par les tensions induites au moyen des aimants permanents (8) dans les enroulements de phase non parcourus par le courant de l'enroulement de stator (4), les signaux de mesure étant transmis à une électronique d'analyse qui détermine le débit volumique du fluide de refoulement.

12. Pompe (1) suivant la revendication 11, **caractérisée en ce que** l'électronique d'analyse tient compte, pour la détermination du débit volumique, des intensités de courant momentanées dans les enroulements de stator (4) individuels.

13. Pompe (1) suivant l'une des revendications 11 et 12, **caractérisée en ce que** l'électronique d'analyse procède à une régulation de quantité de chaleur de la pompe (1).
